# EUROPEAN PATENT APPLICATION

(11) **EP 0 974 969 A2**
(43) Date of publication of application: **26.01.2000**
(21) Application number: 99401727.5
(22) Date of filing: 09.07.1999
(51) Int. Cl.: G11B 23/023

(54) **Cassette accomodation case**

(30) Priority: 09.07.1998 JP 19460398
(71) Applicant: SONY CORPORATION, Tokyo (JP)
(72) Inventor: Yatabe, Kazumoto, c/o Sony Corporation, Tokyo (JP)
(74) Representative: Thévenet, Jean-Bruno

(57) **Abstract**

The cassette accommodation case is applied to a slide system for accommodating a cassette (10) by laterally inserting it from an inserting mouth portion (2) provided on one side. The cassette accommodation case is structured such that the cassette (10) can be inserted in any orientation, to make it possible to smoothly take out the cassette (10) in the case where the cassette (10) is inserted in any orientation. In the cassette accommodation case, an opening mouth portion (4) for a finger to put in to take out the cassette (10) is provided at the central portion of the upper surface. The opening mouth portion (4) is formed into a width (t₁) so that hub driving shaft inserting holes (12) can be completely exposed therefrom even in the case the cassette (10) is inserted in any orientation. As a result, it is possible to smoothly push out the cassette (10) by hooking a finger in the hub driving shaft inserting holes (12) at a time of taking the same out.

## Description

### BACKGROUND OF THE INVENTION

### Field of the Invention

The present invention relates to a cassette accommodation case suited for accommodating a tape cassette such as, for example, an audio compact cassette and the like and particularly, to a cassette accommodation case of a slide type for accommodating a tape cassette by laterally inserting the tape cassette from an inserting mouth portion provided on one side thereof.

### Description of the Related Art

In recent years, in a cassette accommodation case for accommodating and keeping an audio compact cassette, a cassette accommodating case of a slide type for laterally inserting a cassette from an inserting mouth portion provided on one side thereof has been practised.

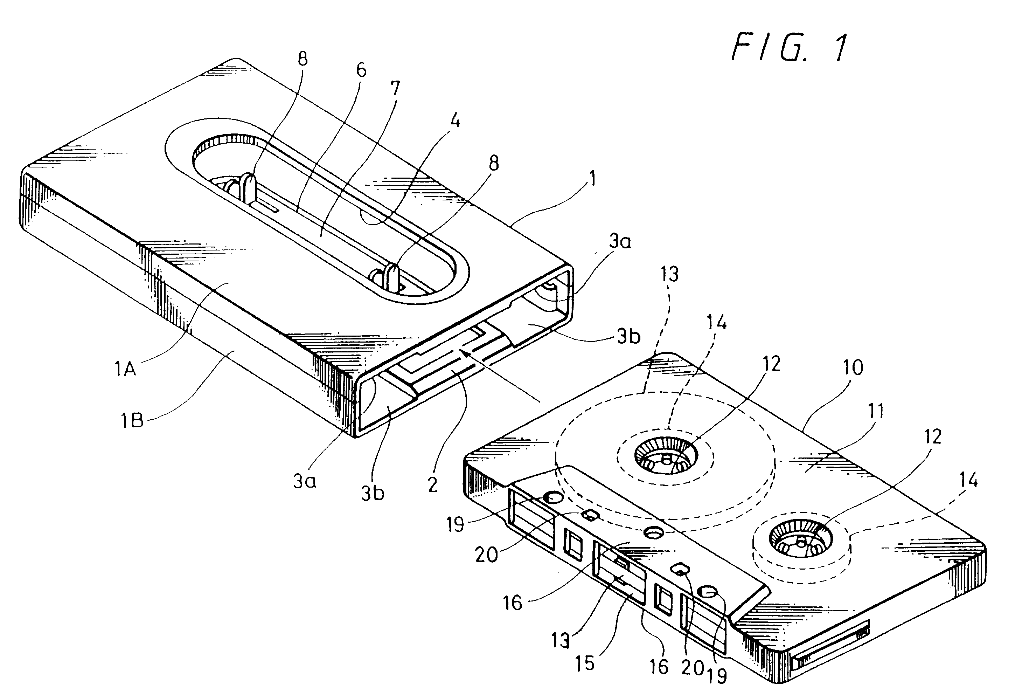

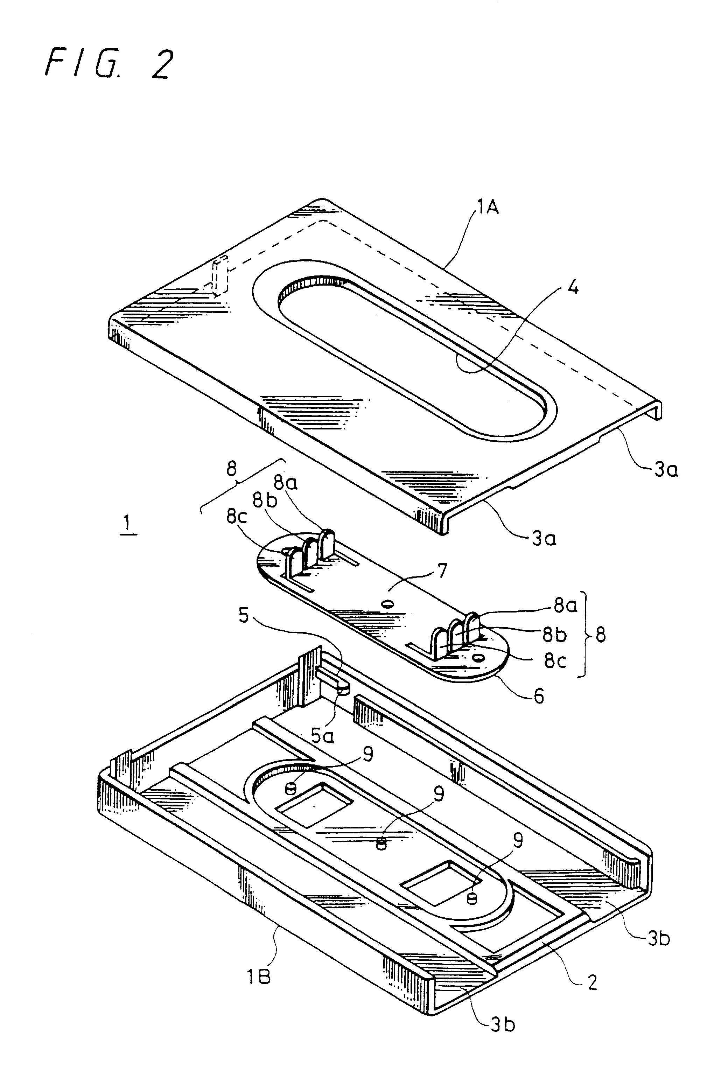

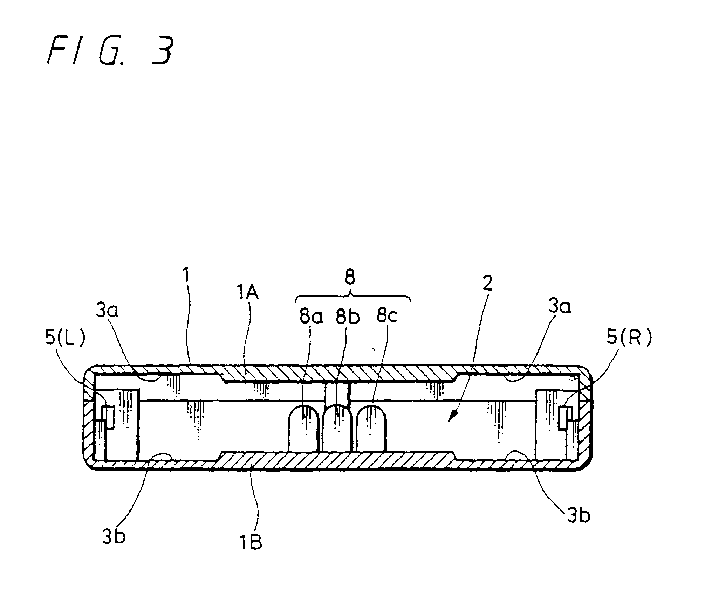

The structure of the conventional cassette accommodation case of a slide type will be shown in FIG. 1 to FIG. 5.

In the figures, reference numeral 1 indicates a cassette accommodation case in which an audio compact cassette (hereafter, referred to simply as a cassette) 10 is accommodated by being laterally inserted from an inserting mouth portion 2 provided on its one side.

First of all, in explaining the structure of the cassette 10 briefly, there are formed hub driving shaft inserting holes 12 on the left and right of a cassette housing 11 of the cassette 10 and corresponding to the hub driving shaft inserting holes 12, a pair of hubs 14 for winding a magnetic tape 13 thereon are rotatably accommodated in inner portion of the cassette housing 11.

On the front surface of the cassette housing 11 is formed an opening portion 15 through which the magnetic tape 13 is exposed, while inside the cassette housing 11, a tape running path is formed like in a way that the magnetic tape 13 led out from the hub (supplying side hub) 14 on one side is wound by the hub (takeup side hub) 14 on the other side through the opening portion 15.

A magnetic head and the like are to be inserted in the opening portion 15 from a cassette deck side. In order to secure the thickness at a portion into which the magnetic head and the like are to be inserted, trapezoid shaped swelled portions 16 which swell to both the upper and lower surface sides, respectively are formed at the front portion of the cassette housing 11.

Furthermore, in the swelled portions 16, capstan shaft inserting holes 19 and positioning reference holes 20 are symmetrically formed with respect to the left and the right.

The cassette accommodation case 1 into which the cassette 10 is inserted is structured by uniting an upper half 1A and a lower half 1B. The upper half 1A is a moulded plastic product moulded from, for example, GPPS (general purpose polystyrene) as its material and also, the lower half 1B is a moulded plastic product moulded from, for example, HIPS (impact-proof polystyrene) as its material. The upper half 1A and the lower half 1B are integrally united by means of ultrasonic-welding and the like while in a state of being united.

Then, the inserting mouth portion 2 is provided on one side surface side of the cassette accommodation case 1 with its surface being wholly opened, and the cassette 10 is laterally inserted from the inserting mouth portion 2 into the cassette accommodation case I in a sliding fashion and then accommodated therein.

The cassette accommodation case 1 is so formed that the cassette 10 is accommodated therein almost without any clearance. To this end, on the inner surface side of each of the upper half 1A and the lower half 1B in the inside of the cassette accommodation case 1, concave grooves 3a and 3b for escaping the swelled portions 16 of the cassette 10 are respectively formed in a lateral direction, that is, in a cassette inserting direction.

The concave grooves 3a and 3b are symmetrically provided on both the right side and the left side of the cassette inserting direction, which makes it possible to insert the cassette whichever orientation is.

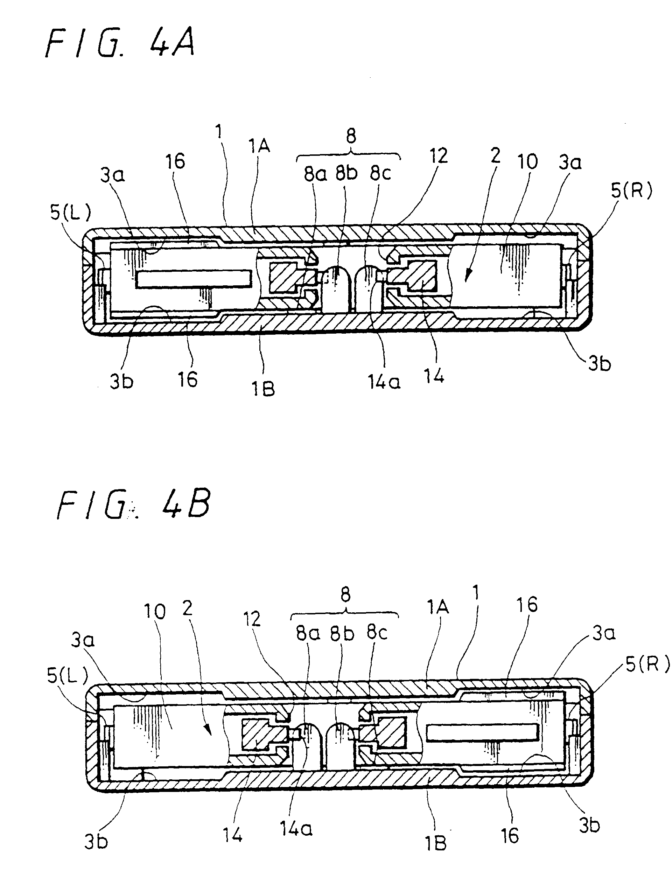

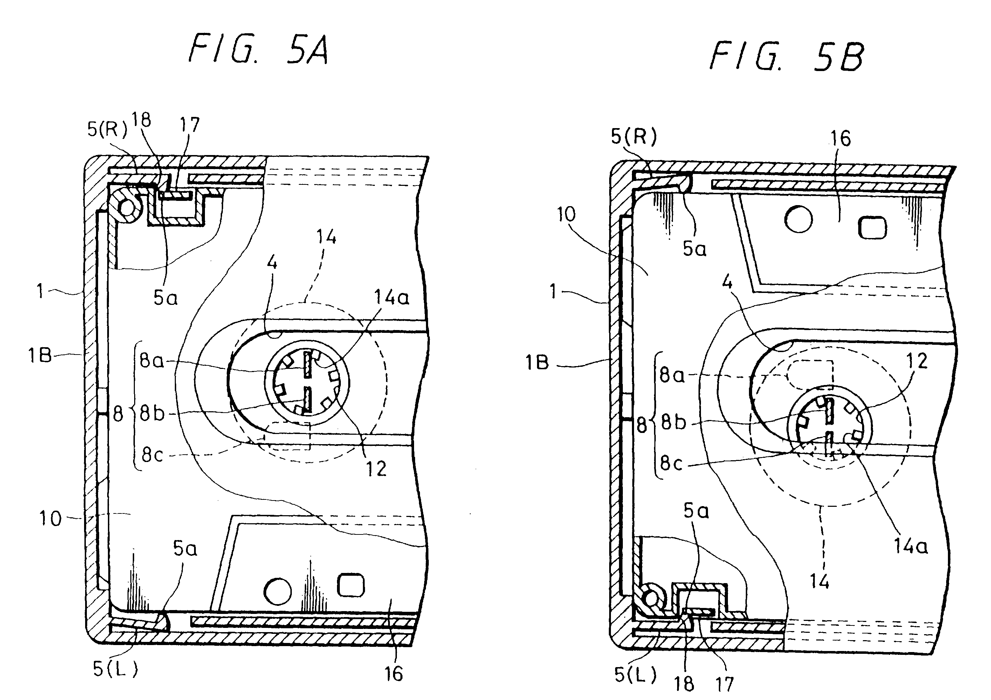

That is, Fig. 4A and FIG. 5A show a state in which the cassette 10 is accommodated in the cassette accommodation case I in a way that the swelled portions 16 face the left side of the cassette inserting direction, while FIG. 4B and FIG. 5B show a state in which the cassette 10 is accommodated in the cassette accommodation case 1 in a way that the swelled portions 16 face the right side of the cassette inserting direction. As described above, since the cassette 10 can be inserted into and accommodated in the cassette accommodation case 1 irrespective of whichever directions it faces, a user doesn't have to ascertain the orientation of the cassette 10 every time he inserts the cassette 10, and can smoothly insert the cassette 10 at times under whatever circumstances, not to speak of in the dark place.

Also, in the cassette accommodation case 1, because fonning portions of the concave grooves 3a and 3b are formed thin in thickness and the thin portions due to the concave grooves 3a and 3b exist on both the left and the right sides of the cassette inserting direction, used amount of plastic as moulding material is pared down by that amount, thereby making it possible to reduce costs by as much as that pared-down amount as well as to achieve lightening.

Also, nearly at a central portion of the upper surface, namely the upper half 1A of the cassette accommodation case 1, an opening portion 4 of an oblong shape along the cassette inserting direction is formed. Thus, when the cassette 10 is to be taken out from the cassette accommodation case 1, the cassette 10 is pushed out by putting a finger (for example, a thumb) from the opening portion 4.

Furthermore, a stopper tab 5 is provided inside the cassette accommodation case 1 so as to prevent the cassette 10 from unexpectedly jumping out therefrom under a state of the cassette 10 being accommodated.

The stopper tab 5 is integrally projectingly formed on the lower half 1B and an engaging convex portion 5a is provided at tip end portion thereof. Then, in the state of the cassette 10 being accommodated in the cassette accommodation case 1, since the engaging convex portions 5a, as shown in Fig. 5, engages with the edge of an aperture portion 18 in which an erroneous erasure protection detecting nail 17 is provided. the cassette 10 is kept in a lightly locked state in the cassette accommodation case 1, thereby preventing the cassette 10 from unexpectedly jumping out (coming oft) from the cassette accommodation case 1.

The cassette accommodation case I of the present example has, as mentioned above, such a structure that the cassette 10 can be inserted in any orientation, so the stopper tab 5 is symmetrically provided as 5 (L), 5(R) on both the left and the right sides of the cassette inserting direction.

That is, Fig. 5A shows a state in which the cassette 10 is accommodated in the cassette accommodation case 1 in a way that the swelled portions 16 face the left side of the cassette inserting direction. In this case, the engaging convex portion 5a of the stopper tab 5 (R) on the right side of the cassette inserting direction engages with the aperture portion 18 of the cassette 10 to maintain the cassette 10 (at this time, the stopper tab 5 (L) on the left side of the cassette inserting direction is escaping from the cassette 10 due to undergoing an elastic deformation).

Also, FIG. 5B shows a state in which the cassette 10 is accommodated in the cassette accommodation case 1 in a way that the swelled portions 16 face the right side of the cassette inserting direction, and in this case, the engaging convex portion 5a of the stopper tab 5 (L) on the left side of the cassette inserting direction engages with the aperture portion 18 of the cassette 10 to maintain the cassette 10 ( at this time, the stopper 5 tab (R) on the right side of the cassette inserting direction is escaping from the cassette 10 due to undergoing an elastic deformation ).

With the cassette accommodation case 1 as mentioned above, in cases where the cassette 10 is inserted in any orientation, the cassette 10 can surely be maintained in the cassette accommodation case 1 and prevented from jumping out of the cassette accommodation case 1.

Furthermore, within the cassette accommodation case 1, a rotation stopping member 6 is equipped for preventing the magnetic tape from becoming loose by blocking unnecessary rotations of the hubs 14 in the cassette 10.

The rotation stopping member 6 is a moulded plastic product moulded from, for example, PP (polypropylene) as its material and is structured such that rotation stopping projecting tabs 8 corresponding to the hub driving shaft inserting holes 12 of the cassette 10 are projectingly formed on a base plate portion 7 to be capable of elastically rising and falling. The base plate portion 7 is attached by being caulked and fixed to caulking projections 9 projectingly provided nearly at a central portion of the inside of the lower half 1B.

Then, when the cassette 10 is inserted into the cassette accommodation case 1, the rotation stopping projecting tabs 8 are pushed down by the cassette 10 and when the cassette 10 is completely accommodated in the cassette accommodation case 1, because the hub driving shaft inserting holes 12 correspond to the rotations stopping projecting tabs 8, respectively, the rotation stopping projecting tabs 8 elastically revert to the erect state and engage with engagement projecting tabs 14a on the internal circumference of the hubs 14 to block the rotation of the hubs 14.

In the rotation stopping member 6, each of the rotation stopping projecting tabs 8 is comprised of three tabs 8a, 8b and 8c, and of these, two tabs are engaged with the hubs 14 to block the rotation of the hubs 14.

That is, as are shown in FIG. 4A and FIG. 5A, in a state in which the cassette 10 is accommodated in the cassette accommodation case 1 with the swelled portions 16 facing the left side of the cassette inserting direction, the two tabs 8a and 8b of the rotation stopping projection tabs 8 are engaged with the engaging projecting tabs 14a of the hubs 14 to block the rotation of the hubs 14 (at this time, the remaining one tab 8c is in a state of being pushed down by the cassette 10).

Also, as is shown in FIG. 4B and 5B, in a state in which the cassette 10 is in a state of being accommodated in the cassette accommodation case 1 with the swelled portions 16 facing the right side of the cassette inserting direction, the two tabs 8b and 8c of the rotation stopping projecting tabs 8 are engaged with the engaging projecting tabs 14a of the hubs 14 to block the rotation of the hubs 14 (at this time, the remaining one tab 8a is in a state of being pushed down).

With the above cassette accommodation case I, in any case in which the cassette 10 is inserted in any orientation, it is possible for the rotation stopping projecting tabs 8 to surely prevent the hubs 14 from unnecessarily rotating as well as the magnetic tape from loosening.

The cassette accommodation case 1 of such the above configuration has been already proposed by the present applicant.

By the way, in order to take out the cassette 10 from the cassette accommodation case 1, as mentioned before, a finger is put in from the opening mouth portion 4 on the upper surface of the case to push out the cassette 10, but in this case, since the surface of the housing of the cassette 10 is flat as well as in a mirror surface state, there may be such a case in which the finger slips thereon with a resultant extreme difficulty in pushing out.

Consequently, a user tries to, on many occasions, push out the cassette 10 by hooking his finger on the hub driving shaft inserting holes 12 of the cassette 10.

However, since the conventional cassette accommodation case 1 does not have an enough width of the opening mouth portion 4, depending on the orientation of the cassette 10, for example, as shown in FIG. 5B, there is a case in which a part of the hub driving shaft inserting hole 12 tends to be hidden, in which state, it is not possible to easily hook the finger in the hub driving shaft inserting hole 12 when to try to take out the cassette 10.

Therefore, in this case, it becomes impossible to smoothly take out the cassette 10, and hence, the cassette accommodation case becomes one not easy to handle.

### SUMMARY OF THE INVENTION

The present invention is implemented in view of solving such problems and its object is to provide a cassette accommodation case in which the hub driving shaft inserting holes do not become in a state of being hidden depending on the orientation of the cassette and from which the cassette is always taken out smoothly.

In order to achieve the above-mentioned object,
there is provided a cassette accommodation case to accommodate a cassette therein by laterally inserting the cassette from an inserting mouth portion provided on one side thereof and to be capable of inserting the cassette in any orientation, which comprises
an opening mouth portion in the central portion on the upper surface for putting a finger in at a time of taking out the cassette, wherein
the opening mouth portion is formed with a width so that hub driving shaft inserting holes can be completely exposed at times of the cassette being inserted in any orientation.

With the cassette accommodation case of the present invention being structured in this manner, since the hub driving shaft inserting holes never become in a state of being hidden even when the cassette is inserted in any orientation, it is possible to easily push out the cassette by hooking the finger at the hub driving shaft inserting holes at a time of taking out the cassette.

### BRIEF DESCRIPTION OF THE DRAWINGS

FIG. 1 is a perspective view showing a cassette accommodation case of a conventional example;
FIG. 2 is an exploded perspective view of the same;
FIG. 3 is a side view of the same;
FIG. 4 is a side view showing the same in which a cassette is in a state of being accommodated while a part is cut off;
FIG. 5 is a cross-sectional view showing the same in which the cassette is in a state of being accommodated while a part is cut off;
FIG. 6 is a perspective view of the cassette accommodation case of the present invention;
FIG. 7 is an exploded perspective view of the same;
FIG. 8 is a plan view of the same in which the cassette is in a state of being accommodated while a part is cut off: and
FIG. 9 is an explanatory diagram of a state in which two cassettes are superposed in respectively reverse orientations.

### DESCRIPTION OF THE PREFERRED EMBODIMENT

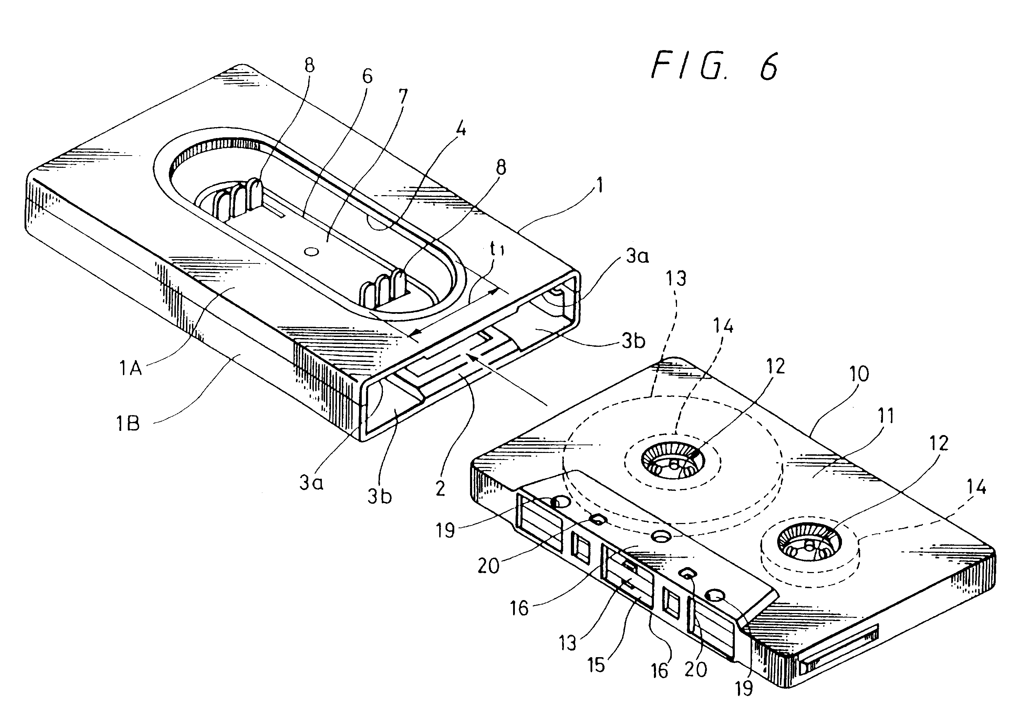

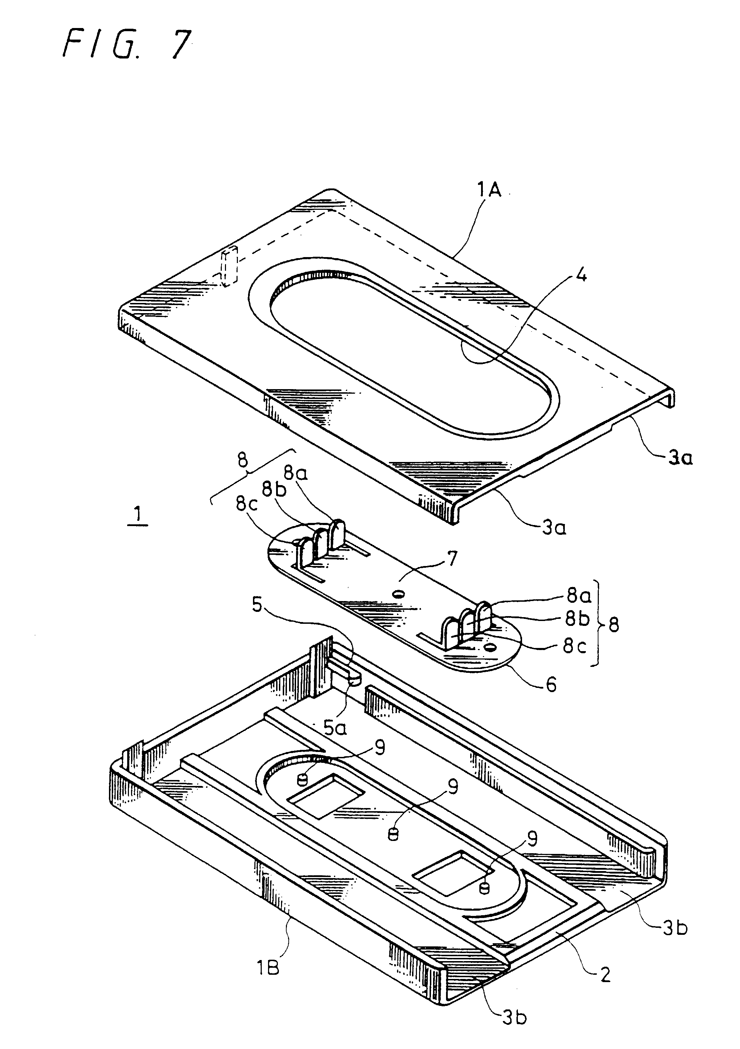

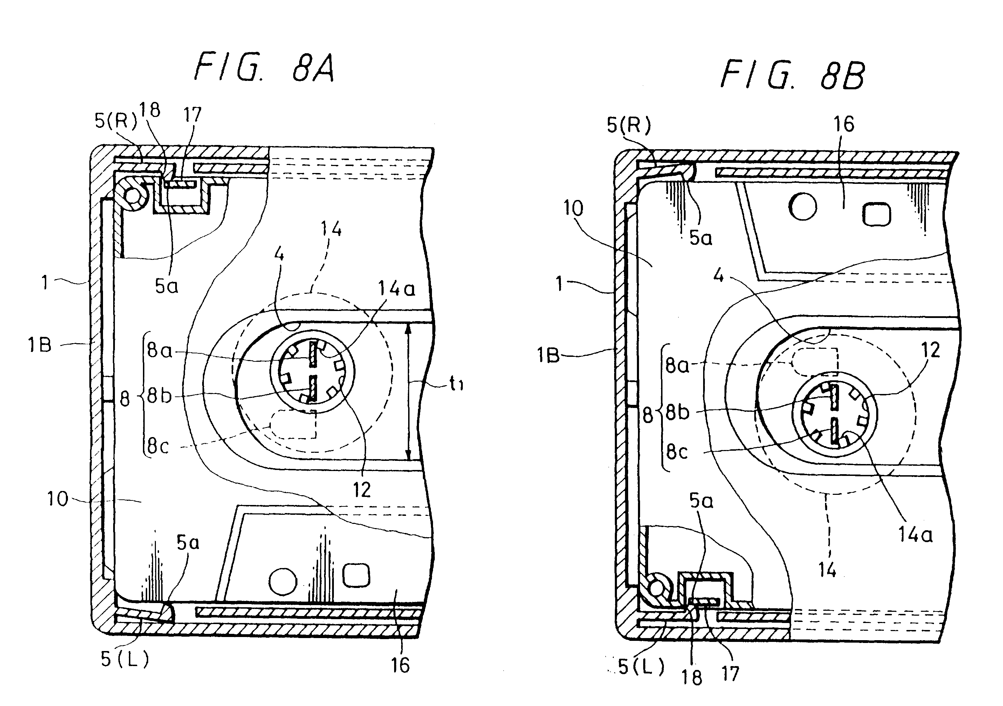

Hereinafter, one of the embodiment of the present invention will be explained in detail with reference to FIG. 6 to FIG. 9.

A fundamental structure of a cassette accommodation case shown in the example is the same as that of the cassette accommodation case of the conventional example.

That is, a cassette accommodation case I of this example is structured by uniting an upper half 1A and a lower half 1B and here, the upper half 1A is a moulded plastic product moulded from, for example, GPPS (general purpose polystyrene) as a material and also, the lower half 1B is a moulded plastic product moulded from, for example. HIPS (impact-proof polystyrene) as a material. The upper half IA and the lower half 1B are further integrally united by means of ultrasonic-welding and the like in a state of being united.

Then, an inserting mouth portion 2 is provided on one side surface side of the cassette accommodation case 1 with its surface being wholly opened, which is so structured that a cassette 10 is laterally inserted from the inserting mouth portion 2 in a sliding fashion.

The cassette accommodation case 1 is such that the cassette 10 is accommodated therein almost without any clearance, and therefore, on the inner sides of the upper half 1A and the lower half 1B in the inside of the cassette accommodation case 1, concave grooves 3a and 3b for escaping the swelled portions 16 of the cassette 10 are respectively formed in a lateral direction, that is, in a cassette inserting direction.

The concave grooves 3a and 3b are provided symmetrically on both left and right sides of the cassette inserting direction, which leads to a structure in which the cassette 10 can be inserted in any orientation.

That is, FIG. 8A shows a state in which the cassette 10 is accommodated in the cassette accommodation case I in a way that the swelled portions 16 face the left side of the cassette inserting direction, while FIG. 8B shows a state in which the cassette 10 is accommodated in the cassette accommodation case 1 in a way that the swelled portions 16 face the right side of the cassette inserting direction and thus, by being able to insert and accommodate the cassette 10 of any orientation in the cassette accommodation case 1, a user doesn't have to ascertain the orientation of the cassette 10 event time he inserts the cassette 10, and can smoothly insert the cassette 10 at times under whatever circumstances, not to speak of in the dark place.

Also, in the cassette accommodation case 1, since forming portions of the concave grooves 3a and 3b are formed thin in thickness and the thin portions due to the concave grooves 3a and 3b exist on both the left and the right sides of the cassette inserting direction, the amount of used plastic as moulding material is reduced by that amount, thereby making it possible to reduce costs as well as to achieve lightening.

Also, on the upper surface of the cassette accommodation case 1, that is, in the central portion of the upper half 1A, an opening portion 4 of an oblong shape along the cassette inserting direction is formed, and when the cassette 10 is to be taken out from the cassette accommodation case 1, the cassette 10 is pushed out by putting a finger (for example, a thumb) from the opening portion 4.

Here, particularly with the cassette accommodation case of the embodiment, the width t₁ of the opening mouth portion 4 is formed larger than the conventional one.

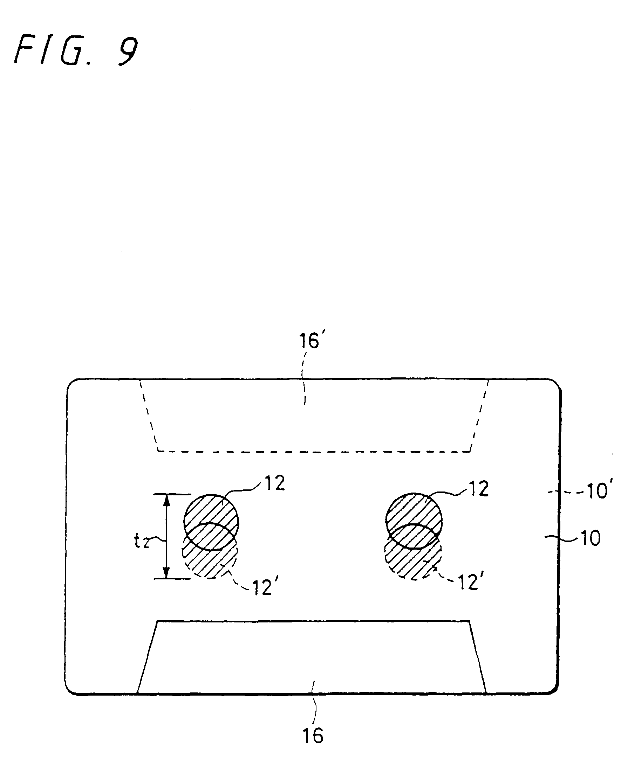

That is, the width t₁ of the opening mouth portion is formed larger, as shown in FIG. 9, than the width dimension t₂ for the portion combining a common portion and a non-common portion (diagonally shaded portion) of the hub driving shaft inserting holes 12 and 12' of the two pieces of the cassettes 10 and 10' which are made when the two cassettes 10 and 10' are superposed in respectively reverse orientations and as a result, when the cassette 10 is in a state of being accommodated in the cassette accommodation case 1, in cases where the cassette 10 is inserted in any orientation, there is provided a structure such that the hub driving shaft inserting holes 12 of the cassette 10 are completely exposed from the opening mouth portion 4 (refer to FIG. 8).

In this manner, with the cassette accommodation case of the embodiment, since the hub driving shaft inserting holes 12 never become in a state of being hidden even when the cassette 10 is inserted in any, orientation, it is possible to smoothly push out the cassette 10 by hooking the finger in the hub driving shaft inserting holes 12 when trying to take out the cassette 10.

Meanwhile, in this embodiment, although the relationship between the t₁ and t₂ is made t₁ > t₂, t₁ = t₂ is also recommendable.

Furthermore, inside the cassette accommodation case 1, there are provided stopper tabs 5 for preventing the cassette 10 from unexpectedly jumping out from a state of the cassette 10 being accommodated.

The stopper tabs 5 are integrally moulded on the lower half 1B to be projected and at the tip end thereof are provided engaging convex portions 5a. Then, when the cassette 10 is in a state of being accommodated in the cassette accommodation case 1, the engaging convex portions 5a of the stopper tabs 5, as shown in FIG. 8, engage with the edges of aperture portions 18 in which erroneous erasure protection detecting nails 17 of the cassette 10 are provided and which keep the cassette 10 in a lightly locked state in the cassette accommodation case 1, thereby preventing the cassette from unexpectedly jumping out (coming off) from the cassette accommodation case 1.

The cassette accommodation case I of the present example has, as mentioned above, such a structure that the cassette 10 can be inserted in any orientation, so in correspondence therewith the stopper tabs 5 are symmetrically provided on both the left and the right sides of the cassette inserting direction.

That is, FIG. 8A shows a state in which the cassette 10 is accommodated in the cassette accommodation case 1 in a way that the swelled portions 16 face the left side of the cassette inserting direction, and in this case, the engaging convex portion 5a of the stopper tab 5 (R) on the right side of the cassette inserting direction engages with the aperture portion 18 of the cassette 10 to maintain the cassette 10 (at this time, the stopper tab 5 (L) on the left side of the cassette inserting direction is escaping from the cassette 10 due to undergoing an elastic deformation).

Also. FIG. 8B shows a state in which the cassette 10 is accommodated in the cassette accommodation case 1 in a way that the swelled portions 16 face the right side of the cassette inserting direction, and in this case, the engaging convex portion 5a of the stopper tab 5 (L) on the left side of the cassette inserting direction engages with the hole portion 18 of the cassette 10 to support the cassette 10 ( at this time, the stopper tab 5 (R) on the right side of the cassette inserting direction is escaping from the cassette 10 due to undergoing an elastic deformation ).

With the cassette accommodation case I as set forth in this embodiment, in cases where the cassette case 10 is inserted in any orientation, the cassette 10 can surely be maintained in the cassette accommodation case 1 and prevented from jumping out of the cassette accommodation case 1.

Furthermore, within the cassette accommodation case 1, a rotation stopping member 6 is equipped for preventing the magnet tape from becoming loose by checking unnecessary rotations of the hubs 14 in the cassette 10.

The rotation stopping member 6 is a moulded plastic product moulded from, for example, PP (polypropylene) as a material and is structured such that rotation stopping projecting tabs 8 corresponding to the hub driving shaft inserting holes 12 of the cassette 10 are projectingly formed on the base plate portion 7 to be capable of elastically rising and falling and the base plate portion 7 is attached by being caulked and fixed to the caulking projections 9 projectingly provided nearly at a central portion of the inside of the lower half 1B.

Then, when the cassette 10 is inserted into the cassette accommodation case 1, the rotation stopping projecting tabs 8 are pushed down by the cassette 10 and when the cassette 10 is completely accommodated in the cassette accommodation case 1, because the hub driving shaft inserting holes 12 correspond to the rotation stopping projecting tabs 8, the rotation stopping projecting tabs 8 elastically revert to the erect state and engage with engagement projecting tabs 14a on the internal circumference of the hubs 14 to check the rotation of the hubs 14.

In the rotation stopping member 6, the rotation stopping tabs 8 are comprised of three tabs 8a, 8b and 8c, and there is provided an arrangement that out of them, two tabs engage with the hubs 14 to check the rotation of the hubs 14.

That is, as is shown in FIG. 8A, in a state in which the cassette 10 is accommodated in the cassette accommodation case 1 with the swelled portions 16 facing the right side of the cassette inserting direction, the two tabs 8a and 8b of the rotation stopping tabs 8 are engaged with the engaging projecting tabs 14a of the hubs 14 to check the rotation of the hubs 14 (at this time, the remaining one tab 8c is in a state of being pushed down by the cassette 10).

Also, as is shown in FIG. 8B, in a state in which the cassette 10 is in a state of being accommodated in the cassette accommodation case 1 with the swelled portions 16 facing the right side of the cassette inserting direction, the two tabs 8b and 8c of the rotation stopping projecting tabs 8 are engaged with the engaging projecting tabs 14a of the hubs 14 to check the rotation of the hubs 14 (at this time, the remaining one tab 8a is in a state of being pushed down by the cassette 10).

With the above cassette accommodation case 1, in cases in which the cassette 10 is inserted in any orientation, it is possible for the rotation stopping projecting tabs 8 to surely prevent the hubs 14 from unnecessarily rotating as well as the magnetic tape from loosening.

Furthermore, in the embodiment, as apparent from the figures, the tip end shapes of the respective tabs 8a, 8b and 8d of the rotation stopping projecting tabs 8 are formed in a curved line state (an arc state). As a result, at times of the cassette 10 being inserted into (or being taken out from) the cassette accommodation case 1, even when the cassette 10 brushes by the tip end portions of the respective tabs 8a, 8b and 8c of the rotation stopping projecting tabs, abrasive flaws are not easily attached on the surface of the cassette 10, which is effective in protecting the cassette.

Up to now, one example of the embodiment of the present invention has been explained, but needless to say, the present invention is not limited to the embodiment.

As is apparent from the above explanation, since the cassette accommodation case of the present invention is such that the hub driving shaft inserting holes of the cassette are completely exposed from the opening mouth portion in cases of the cassette being inserted in any orientation, it becomes possible to smoothly push out the cassette by hooking the linger to the hub driving shaft at a time of taking out the cassette, with the resultant improvement in the easiness of use when compared with the conventional one.

Having described preferred embodiments of the present invention with reference to the accompanying drawings, it is to be understood that the present invention is not limited to the above-mentioned embodiments and that various changes and modifications can be effected therein by one skilled in the art without departing from the scope of the present invention as defined in the appended claims.

## Claims

1. A cassette accommodation case which is so structured as to accommodate a cassette (10) by laterally inserting it from an inserting mouth portion (2) provided on one side thereof and further, is structured so that the cassette (10) can be inserted in any orientation, comprising:
at the central portion of an upper surface, an opening mouth portion (4) into which a finger is inserted when the cassette (10) is taken out; wherein
the opening mouth portion (4) is formed to have such a width (t₁) that hub driving shaft inserting holes (12) of the cassette (10) are completely exposed therefrom even in a case where the cassette (10) is inserted in any orientation.

2. A cassette accommodation case according to claim 1, further comprising a pair of stopper tabs (5) for preventing the cassette (10) from coming off from the cassette accommodation case.

3. A cassette accommodation case as claimed in claim 2, wherein the stopper tab (5) engages with an edge of an aperture (18) in which an erroneous erasure protection detecting nail (17) is provided.

4. A cassette accommodation case according to claim 1, further comprising a rotation stopping projecting tab (8) which engages with the hub driving shaft inserting hole (12).

5. A cassette accommodation case as claimed in claim 4, wherein the rotation stopping projection tab (8) is comprised of a plurality of tabs (8a, 8b, 8c).
